# EUROPEAN PATENT SPECIFICATION

(11) **EP 2 678 727 B1**
(45) Date of publication and mention of the grant of the patent: **01.01.2020**
(21) Application number: 12702282.0
(22) Date of filing: 07.02.2012
(51) Int. Cl.: G02B 6/44

(54) **DEVICE FOR HOUSING LENGTHS OF OPTICAL FIBRES**
VORRICHTUNG ZUR AUFNAHME LÄNGLICHER GLASFASERN
DISPOSITIF POUR LOGER DES LONGUEURS DE FIBRES OPTIQUES

(30) Priority: 24.02.2011 IT MI20110279
(43) Date of publication of application: 01.01.2014
(73) Proprietor: Prysmian S.p.A., 20126 Milano (IT)
(72) Inventor: ABBIATI, Fabio, 20126 Milano (IT)
(74) Representative: Colombo, Stefano Paolo
(86) International application number: PCT/EP2012/052011
(87) International publication number: WO 2012/113643

(56) References cited:
- US-A1- 2003 007 768
- US-B1- 6 250 816
- US-B1- 6 278 830
- US-B1- 6 438 311

## Description

The present invention relates to a device for housing lengths of optical fibres. This device can be used, for example, in the installation of optical access networks.

An optical network of the type known as FTTP ("Fibre To The Premises) or FTTH ("Fibre To The Home") is an optical access network which supplies a number of end users with broadband or ultra-wideband communications services, in other words services which require data transmission speeds of several hundreds of Mbit/s or even higher speeds.

Typically, an FTTP or FTTH optical network comprises a control cabinet, a series of line joints, a termination or extraction joint and a distribution box. The distribution box is typically positioned in the basement of the building in which the end users live. An optical cable, which will be referred to hereafter as a "riser cable", emerges from the distribution box and runs vertically inside the building from the basement to each floor.

On each floor of the building, an access window can be cut in the sheath of the riser cable and one or more optical fibres can be extracted from it. Each extracted optical fibre can then be routed towards the apartment of a user living on the floor in question. At any intermediate point between the access window and the user's apartment, the extracted optical fibre can be joined to a user's optical cable (also known as a "drop cable"). The joints between the optical fibres extracted from the riser cable on one floor of the building and the optical fibres of the drop cables installed on this floor are typically housed in suitable transition boxes.

The free end of each user cable is typically located in the user's apartment in a suitable termination box, in such a way that the user can connect it directly to his devices which use broadband services (such as a PC and a set-top box).

The control cabinets, the line or extraction joints, the distribution boxes, the transition boxes and the termination boxes can each include a surface having guide elements shaped so as to help the operator to arrange any excess length of optical fibres in an orderly way on the surface.

In particular, the guide elements generally comprise a substantially cylindrical spool around which the operator can wind the excess length of the optical fibres. The radius of the spool is greater than the minimum bend radius of the optical fibres, which depends on the type of fibre. The spool not only serves to store the fibres, but also ensures that, if the optical fibres are subject to traction, they do not become bent with a bend radius which is less than the minimum radius.

US 6 612 515 describes a spool comprising a centre post and a plurality of upper and lower fins which extend perpendicularly to the axis of the centre post. The spool can be connected removably to a spool support tray. The excess fibre is wound around the main body of the spool and is held in position by the fins. The spool is then connected to the tray and any length of fibre which is not wound around the spool is housed on the tray.

The spool described in US 6 612 515 has a number of drawbacks.

The present applicant has observed that, in order to install a distribution, transition or termination box quickly and efficiently, the operator must first gather up the excess length of all the optical fibres to be housed in the box into a single winding, and must then arrange the winding around the spool. Thus the installation of the boxes is much quicker than the operation of winding the excess lengths of optical fibre around the spools one by one.

However, this operation may be complicated and may not be repeatable when the addition of other optical fibres is required. This is because fins projecting towards the spool can be provided around the spool, in such a way that a passage is created between the spool and the end of each fin. The fins serve to retain the optical fibres against the surface around the spool, and to prevent them from falling out. In order to arrange the optical fibre winding around the spool, the operator must therefore pass the winding through the passages between the spool and the fins, in such a way that the optical fibres arranged on the surface around the spool lie under the fins. If the passages between the spool and the fins are narrow, however, the operation of passing the winding of the excess length of all the optical fibres through the passages around the spool in a single manoeuvre may not be easy. It requires a high level of dexterity in the operator and there is a risk that some optical fibres may be bent or broken.

Although the possibility of separating the spool described in US 6 612 515 from the tray may facilitate the winding of the optical fibres around it, the Applicant has observed that this spool has a highly complex structure, with the disadvantage that it is difficult and costly to manufacture. It is also bulky and therefore less suitable for use in boxes for FTTP or FTTH networks, where the size of the box is a crucial parameter.

Further spool and fin arrangements with and without flexible fins are disclosed in US6438311, US6278830, US6250816, and US20030007768. In view of the above, the object of the present invention is to provide a device according to claim 1 for housing lengths of optical fibres comprising a spool which facilitates the arrangement of the optical fibres around the spool.

In the remainder of the present description and in the claims, the expression "device for housing optical fibres comprising a spool" denotes any device having a surface adapted to receive lengths of optical fibres and a spool around which the lengths of optical fibres can be wound. By way of non-limiting example, the device can be a portion of a control cabinet, a line or extraction joint, a distribution box, a transition box or a termination box. In particular, the device can be the base or cover of a distribution box, a transition box or a termination box. Alternatively, the device can be a joint support tray or "organizer", which can, if necessary, be connected to the base of a distribution box, a transition box, a termination box, a line or extraction connection, or a control cabinet.

The present invention will be made clearer by the following detailed description, which is provided as a non-limiting example, to be read with reference to the appended drawings, in which:
- Figure 1 is an axonometric view of a device for housing optical fibres according to a first embodiment of the present invention;
- Figure 2 is an enlarged view of the portion of Figure 1 enclosed in the dotted rectangle;
- Figure 3 is an axonometric view of the device of Figure 1, cut along the line A of Figure 1;
- Figure 4 is a plan view from above of the device of Figure 1;
- Figure 5 is a view from below of the device of Figure 1;
- Figure 6 shows a step of the operation of arranging a winding of optical fibres in the device of Figure 1;
- Figure 7 shows schematically the device of Figure 1 with the winding of optical fibre housed therein;
- Figure 8 is an axonometric view of a device for housing optical fibres according to a second embodiment of the present invention;
- Figure 9 is an enlarged view of the portion of Figure 8 enclosed in the dotted rectangle;
- Figure 10 is an axonometric view of the device of Figure 8, cut along the line B of Figure 8;
- Figure 11 is a plan view from above of the device of Figure 8;
- Figure 12 is a view from below of the device of Figure 8;
- Figure 13 shows a step of the operation of arranging a winding of optical fibres in the device of Figure 8; and
- Figure 14 shows schematically the device of Figure 8 with the winding of optical fibre housed therein.

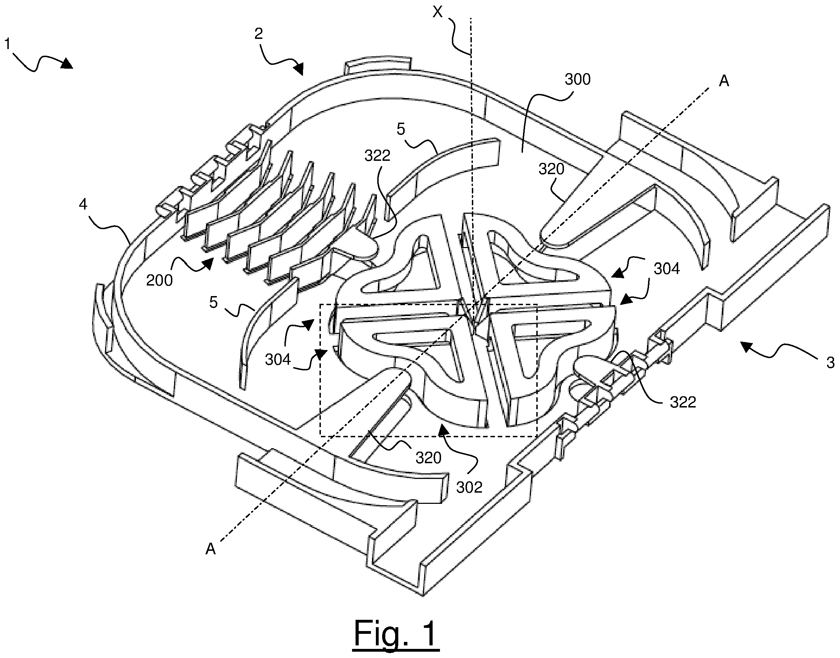

Figures 1 - 7 show a device 1 for housing optical fibres according to a first embodiment of the present invention.

The device 1 is a joint support tray adapted to be connected to a base of a box, for example a distribution box, a transition box or a termination box of an FTTP or FTTH network.

The device 1 preferably comprises a joint housing portion 2, a fibre housing portion 3 and an outer wall 4 which delimits the overall perimeter of the combination of the two portions 2, 3. The joint housing portion 2 and the fibre housing portion 3 are separated from each other by two partitions 5. The outer wall 4 and the partitions 5 can have straight portions and curved portions. The curved portions preferably have a bend radius greater than a minimum bend radius, which depends on the type of optical fibre to be housed in the device 1. For example, for optical fibres of the type defined in ITU-T Recommendation G.652D, the minimum bend radius to which optical fibres can be subjected with acceptable bend losses is 30 mm.

The joint housing portion 2 preferably comprises a number of adjacent joint support elements 200, each of which can house a corresponding joint between optical fibres.

The fibre housing portion 3 comprises a fibre support surface 300 and a spool 302 positioned substantially in the centre of the fibre support surface 300.

The fibre support surface 300 is preferably substantially rectangular in shape with rounded corners, or elliptical in shape.

The spool 302 preferably takes the form of a cylinder having an axis X substantially perpendicular to the fibre support surface 300 and a cross section having rotational symmetry about the axis X. In the remainder of the present description and in the claims, the expression "axis which is substantially perpendicular to the fibre support surface" indicates an axis whose direction forms an angle of not more than 20° with a line perpendicular to the surface.

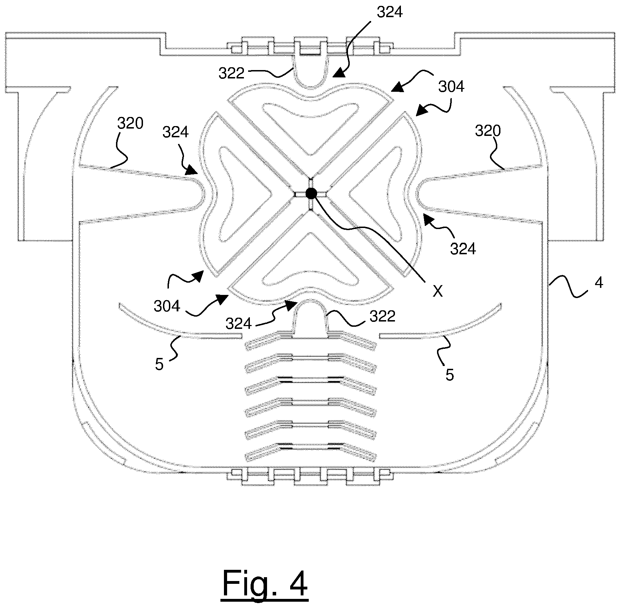

More specifically, in this first embodiment, the spool 302 comprises four lobes 304 having the same shape (the angle of rotation of the rotational symmetry is therefore 90°). As shown in Figure 4, the spool 302 is in the shape of a cloverleaf with four petals extending from the axis X.

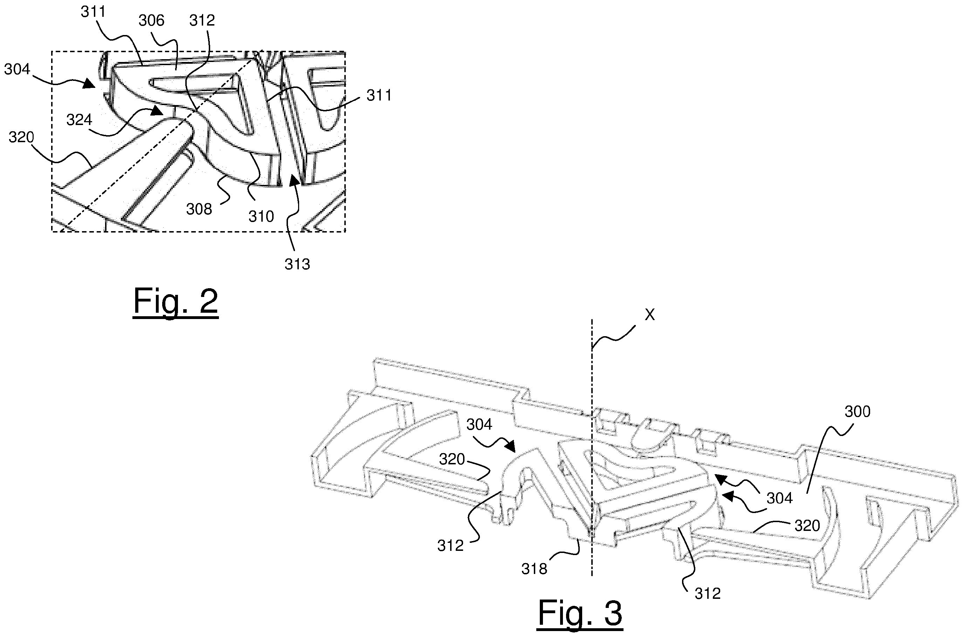

With reference to Figures 2, 3 and 4, each lobe 304 preferably comprises an upper surface 306 and an outer lateral wall 308. The upper surface 306, shown in broken lines in Figure 4, is substantially in the shape of a circular sector with a central angle of 90°. The vertex of the circular sector faces the axis X of the spool 302. In the embodiment shown in the various drawings, the upper surface 306 of each lobe 304 is delimited by an edge 310 opposite the vertex and two edges 311 at a right angle to each other. The edge 310 is shaped substantially in the form of an arc of a circle. It preferably comprises a central bend 312. The upper surface 306 can be solid or, as shown in Figures 1 - 7, can have an opening. The opening is such that a strip following the edges 310 and 311 is formed.

The outer lateral wall 308 of each lobe 304 projects downwards from the edge 310 in a direction substantially perpendicular to the upper surface 306. The outer lateral wall 308 of each lobe 304, like the edge 310, has a curved profile with a central bend.

The edges 311 of one lobe and of the immediately circumferentially adjacent lobe are spaced apart so as to form a channel 313 (Figure 2). In other words, the four lobes 304 are arranged on the fibre support surface 300 at a certain distance from each other. Their upper surfaces 306 are arranged substantially parallel to the fibre support surface 300 and at a certain height above it.

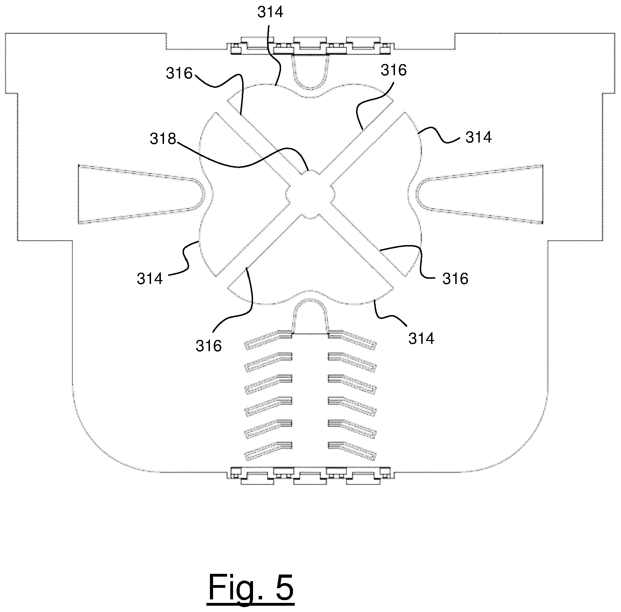

Under each lobe 304, the fibre support surface 300 preferably has a corresponding opening 314 (shown in Figure 5) having substantially the same shape as the upper surface 306 of the lobe 304 and a slightly greater size. This enables each lobe 304 to be retracted into the fibre support surface 300, thus engaging the corresponding opening 314 located below it, as described more fully below. Each opening 314 in the fibre support surface 300 is delimited by a curved side with a central bend and by two sides at a right angle to each other, joined by a small curved connecting line.

The four openings 314 define four arms 316 and a lobe support surface 318 on the fibre support surface 300 (as shown in Figure 5). The lobe support surface 318 is substantially circular and is located between the four vertices of the lobes 304 (namely, substantially on the axis X of the spool 302), while the four arms 316 extend radially from the lobe support surface 318 in directions which are substantially perpendicular to each other, thus laterally delimiting the openings 314. The arms 316 substantially form the bases of the channels 313.

Each lobe 304 is preferably connected at its vertex to the lobe support surface 318 and projects from this surface.

The fibre housing portion 3 also comprises one or more fins 320, 322 (Figures 1 - 4). In particular, in the embodiment shown in the drawings, the fibre housing portion 3 comprises two first fins 320 and two second fins 322. The first fins 320 extend from the short sides of the fibre housing portion 3 towards the spool 302, preferably towards the axis X of the spool 302. Similarly, the second fins 322 extend from the long sides of the fibre housing portion 3 towards the spool 302, preferably towards the axis X of the spool 302.

Each fin 320, 322 is aligned with the central bend 312 in the edge 310 and in the outer lateral wall 308 of a corresponding lobe 304, along a radial direction of the spool 302. Additionally, each fin 320, 322 preferably has a free end terminating in the proximity of the central bend 312. Thus each lobe 304 and the end of the fin 320, 322 facing it form a U-shaped passage 324.

The fins 320, 322 are flat and extend parallel to the fibre support surface 300. Additionally, the fins 320, 322 are located at substantially the same height as the upper surfaces 306 of the lobes 304 relative to the fibre support surface 300. In other words, the fins 320, 322 are substantially aligned with the upper surfaces 306 of the lobes 304. Preferably, openings shaped in the same way as the fins 320, 322 are provided in the fibre support surface 300 (Figure 5).

The device 1 preferably has a width of between 10 cm and 20 cm and a length of between 5 cm and 15 cm.

The device 1 is preferably made in one piece by moulding from a plastic material. The plastic material used can be, for example, ABS (acrylonitrile-butadiene-styrene).

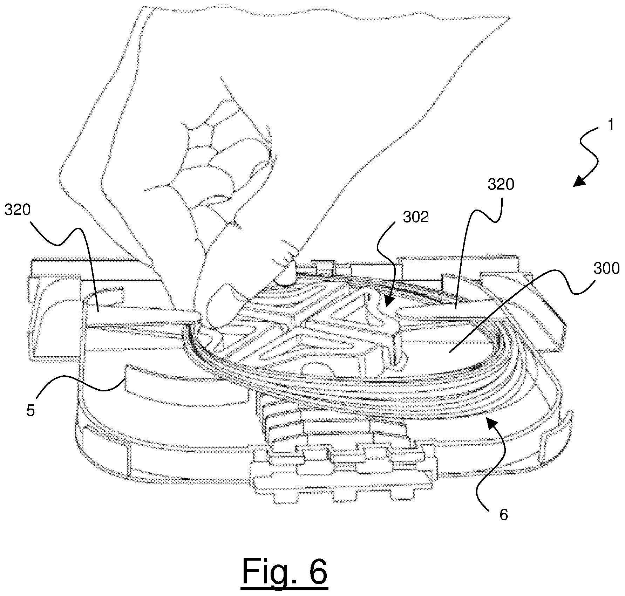

When an operator wishes to use the device 1 to house, for example, the excess length of optical fibre required to join the optical fibres of a riser cable and the optical fibres of a user cable, he initially places the joints in the joint support elements 200 and then gathers the excess lengths of the joined optical fibres into a single winding 6. The operator then pushes gently (using one or more fingers, for example) on the upper surface 306 of one of the lobes 304 of the spool 302, near its edge 310. At the same time, the operator can move the winding 6 towards the edge 310, as shown in Figure 6. Under this pressure, the lobe 304 is partially retracted into the fibre support surface 300, engaging at least part of the underlying opening 314. Thus the edge 310 of the lobe 304 moves away from the free end of the fin 320 (or 322) facing the lobe 304, so that the corresponding passage 324 widens.

The movement of the lobe 304 relative to the fibre support surface 300 is made possible by various factors (considered individually or in combination with each other). The shape of the lobes and the manner in which they are connected to the fibre support surface 300 are important factors. The material used and the thicknesses also help to make the lobes flexible with respect to the fibre support surface 300. The arms 316 and the lobe support surface 318 have the practical effect of connecting the spool 302 (in other words, each lobe 304 of the spool 302) in an elastic way to the fibre support surface 300. When a lobe of the spool 302 is subjected to pressure by the operator, the arms 316 and the lobe support surface 318 bend slightly so as to allow the lobe 304 to be retracted into the underlying opening. Since all the lobes 304 are rigidly connected to the lobe support surface 318, all the lobes 304 move substantially in a combined way when one of them is pushed, as shown in Figure 6.

By continuing to push on the lobe 304 (which is therefore kept in the retracted position), the operator can then conveniently pass the whole winding of fibres 6 through the widened passage 324, thus placing the fibres under the fin 320 (or 322). When the operator releases his pressure on the edge 310 of the lobe 304, the elastic return action of the arms 316 causes the lobe to return to its original position (in other words, above the corresponding opening 314).

The operator can then repeat the operation for the other three lobes 304. Whenever a lobe 304 is pushed, it is retracted into the fibre support surface 300, thus engaging the underlying opening 314 and widening the corresponding passage 324.

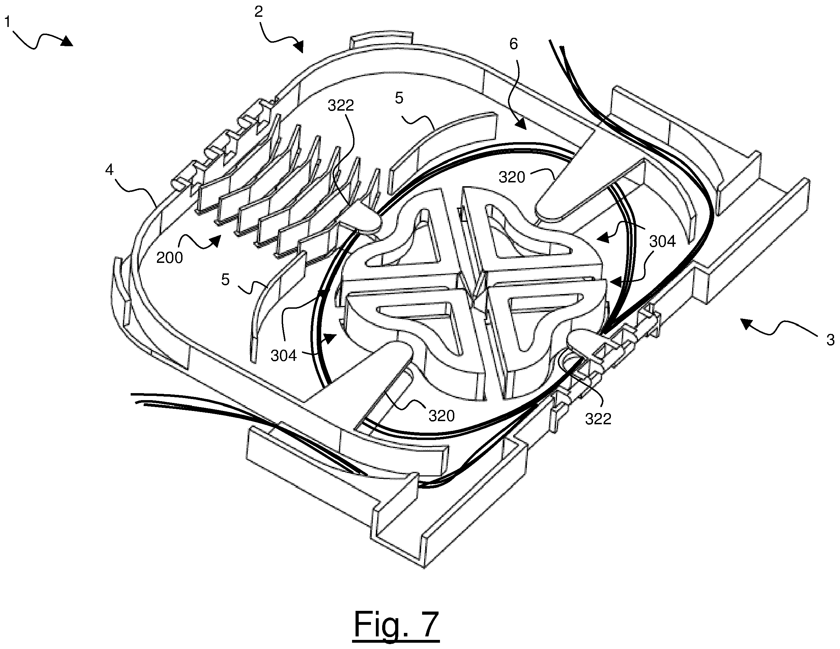

When the operator has completed the operation for all four lobes 304, the winding of fibres 6 then rests entirely on the fibre support surface 300 around the spool 302 under the first fins 320 and the second fins 322, as shown in Figure 7.

The joints can be placed in the joint support elements 200 after the fibre winding 6 has been arranged around the spool 302. The operator can then carry out any subsequent steps of the installation of the device 1.

The first fins 320 and the second fins 322 advantageously retain the optical fibres loosely around the spool 302, substantially on the fibre support surface 300, especially when the device 1 is kept in a vertical or inverted position. This function of the fins 320, 322 is aided by the shape of the passages 324, which have a curvature opposite to the curvature of the fibres of the winding 6.

The device 1 thus facilitates the arrangement of the optical fibres around the spool 302, since it is simply necessary to exert a gentle pressure on the edge 310 of each lobe 304 in order to widen the passages 324 between the spool 302 and the fins 320, 322, thus allowing the whole winding of optical fibres 6 to pass through in a single operation. This operation is extremely simple and also minimizes the risk of damage or breakage of the fibres caused by a hasty or unskilled operator.

The device 1 can also be made in one piece, without separate parts which may be lost or damaged. It can also be made in a very small size which would be particularly suitable for FTTP or FTTH applications.

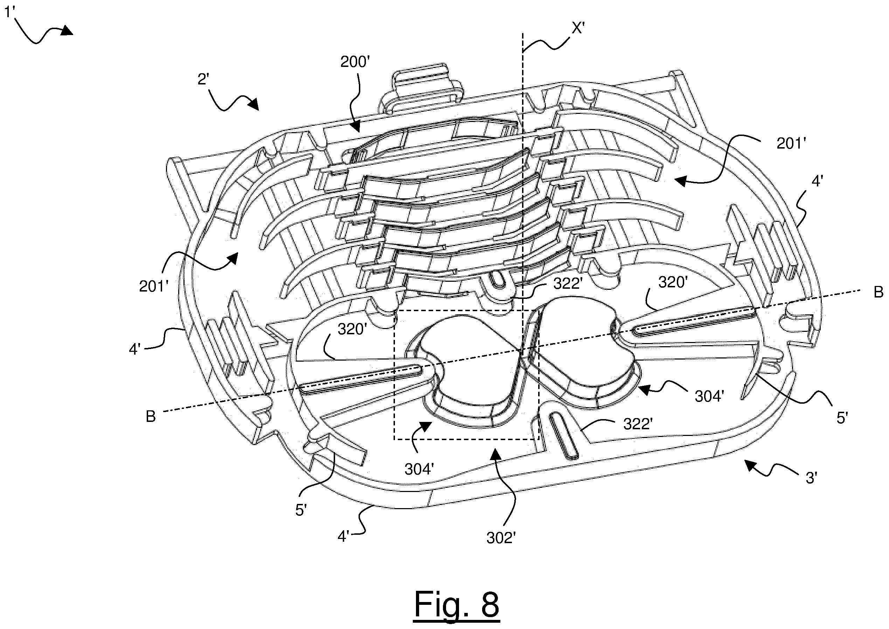

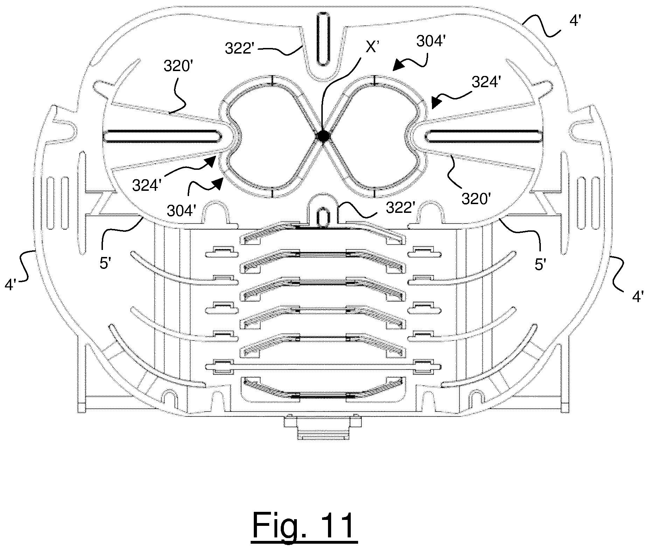

Figures 8 - 13 show a device for housing optical fibres 1' according to a second embodiment of the present invention.

Here again, the device 1' is a joint support tray adapted to be connected to a base of a box, for example a distribution box, a transition box or a termination box of an FTTP or FTTH network.

The device 1' preferably comprises a joint housing portion 2', a fibre housing portion 3' and outer walls 4' which delimit the overall perimeter of the combination of the two portions 2', 3'. The fibre housing portion 3' is partially surrounded by two partition walls 5' which separate it from the joint housing portion 2'. The outer walls 4' and the partition walls 5' can have straight portions and curved portions. The curved portions preferably have a bend radius greater than a minimum bend radius, which depends on the type of optical fibre to be housed in the device 1. For example, for optical fibres of the type defined in ITU-T Recommendation G.657A1, the minimum bend radius to which optical fibres can be subjected with acceptable bend losses is 20 mm.

The joint housing portion 2' preferably comprises a number of adjacent joint support elements 200', each of which can house a corresponding joint between optical fibres. It also comprises guide elements 201' for maintaining the separation between the optical fibres which emerge from the joints housed in the joint support elements 200'.

The fibre housing portion 3' comprises a fibre support surface 300' and a spool 302' positioned substantially in the centre of the fibre support surface 300'.

The fibre support surface 300' is preferably substantially rectangular in shape with rounded corners, or elliptical in shape.

The spool 302' projects perpendicularly from the fibre support surface 300'. The spool 302' preferably takes the form of a cylinder having an axis X' substantially perpendicular to the fibre support surface 300' and a cross section having rotational symmetry about the axis X'.

More specifically, in this second embodiment, the spool 302' comprises two lobes 304' having the same shape (the angle of rotation of the rotational symmetry is therefore approximately 180°).

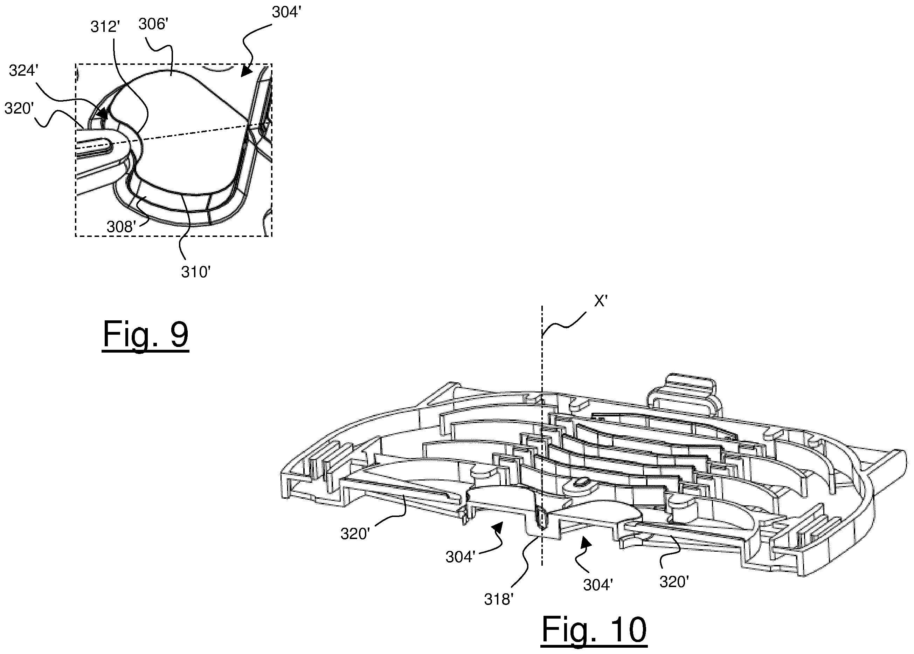

With reference to Figure 9, each lobe 304' preferably comprises an upper surface 306' and an outer lateral wall 308'. The upper surface 306' is substantially heart-shaped with a vertex facing the axis X' of the spool 302'. The upper surface 306' of each lobe 304' has an edge 310' opposite the vertex of the heart shape, this shape of this edge being substantially an arc of a circle. The edge preferably comprises a central bend 312'. The upper surface 306' can be solid as shown in Figures 8-14, or can have an opening.

The outer lateral wall 308' of each lobe 304' projects downwards from the edge 310' in a direction substantially perpendicular to the upper surface 306', along substantially the whole of its perimeter. Along the edge 310', the lateral wall 308' also has a curved profile, substantially in the form of an arc of a circle with a central bend.

The two lobes 304' are positioned on the fibre support surface 300' with their vertices facing each other and spaced a certain distance apart. The upper surfaces 306' of the lobes 304' are arranged substantially parallel to the fibre support surface 300' and at a certain height above it.

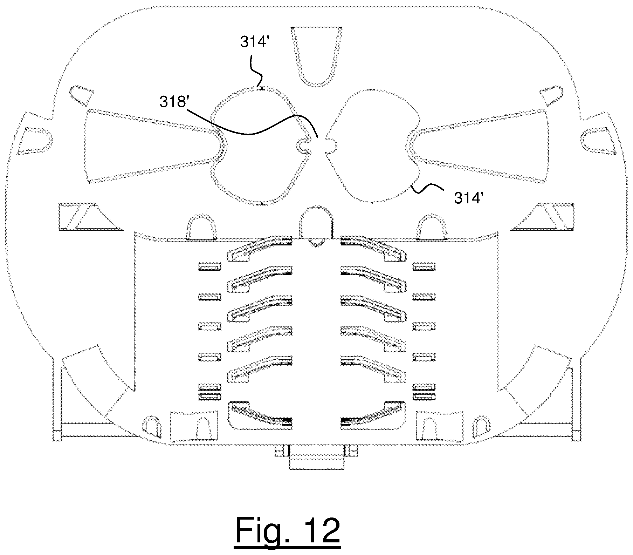

Under each lobe 304', the fibre support surface 300' preferably has a corresponding opening 314' (shown in Figure 12) having substantially the same heart shape as the upper surface 306' of the lobe 304' and a slightly greater size. This enables each lobe 304' to be retracted into the fibre support surface 300', thus engaging the corresponding opening 314' located below it, as described more fully below.

The two openings 314' define a lobe support surface 318' (also visible in Figure 12), separating the two openings 314', on the fibre support surface 300'.

Each lobe 304' is preferably connected at its vertex to the lobe support surface 318' and projects from this surface.

The fibre housing portion 3' also comprises one or more fins 320', 322'. In particular, in the embodiment shown in the drawings, the fibre housing portion 3' comprises two first fins 320' and two second fins 322'. The first fins 320' extend from the short sides of the fibre housing portion 3' towards the spool 302', preferably towards the axis X' of the spool 302'. Similarly, the second fins 322' extend from the long sides of the fibre housing portion 3' towards the spool 302', preferably towards the axis X' of the spool 302'.

Each of the first fins 320' is aligned with the central bend 312' in the edge 310' and in the outer lateral wall 308' of a corresponding lobe 304', along a radial direction of the spool 302'. Additionally, each of the first fins 320' preferably has a free end terminating in the proximity of the central recess 312'. Thus each lobe 304' and the end of the fin 320' facing it form a U-shaped passage 324'.

The fins 320', 322' are flat and extend parallel to the fibre support surface 300'. Additionally, the fins 320', 322' are located at substantially the same height as the upper surfaces 306' of the lobes 304' relative to the fibre support surface 300'. In other words, the fins 320', 322' are substantially aligned with the upper surfaces 306' of the lobes 304'.

The device 1' preferably has a width of between 5 cm and 15 cm and a length of between 5 cm and 12 cm.

The device 1' is preferably made in one piece by moulding from a plastic material. The plastic material used can be, for example, ABS (acrylonitrile-butadiene-styrene).

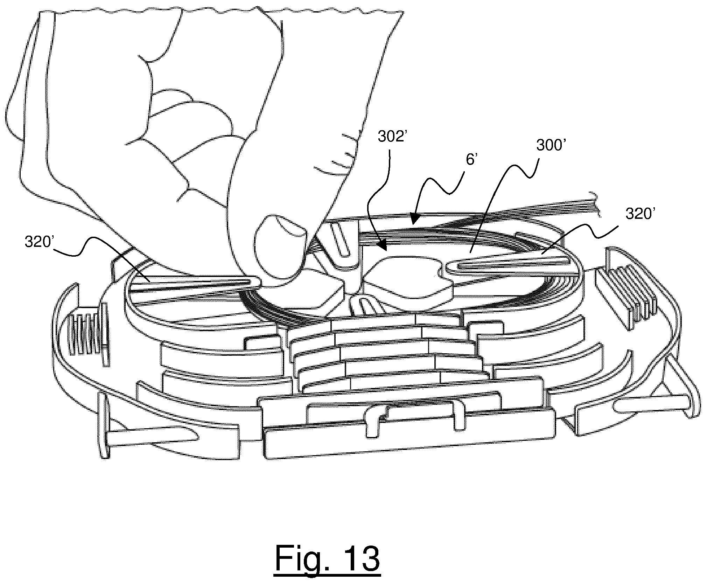

When an operator wishes to use the device 1' to house, for example, the excess length of optical fibre required to join the optical fibres of a riser cable and the optical fibres of a user cable, he initially places the joints in the joint support elements 200' and then gathers the excess lengths of the joined optical fibres into a single winding 6'. The operator then pushes gently (using one or more fingers, for example) on the upper surface 306' of one of the lobes 304' of the spool 302', near its edge 310'. At the same time, the operator can move the winding 6' towards the edge 310', as shown in Figure 13. Under this pressure, the lobe 304' is partially retracted into the fibre support surface 300', engaging at least part of the underlying opening 314'. Thus the edge 310' of the lobe 304' moves away from the free end of the fin 320' facing the lobe 304', so that the corresponding passage 324' widens.

The movement of the lobe 304' relative to the fibre support surface 300' is made possible by the fact that the lobe is connected to the lobe support surface 318' in an elastic way, solely at the vertex of the lobe. When a lobe of the spool 302' is subjected to pressure by the operator, the connection between the vertex and the lobe support surface 318' is deformed so as to allow the lobe 304' to be retracted at least partially into the underlying opening 314'. Since the two lobes 304' are connected independently to the lobe support surface 318', when one lobe 304' is pushed the other remains substantially still, as shown in Figure 13.

By continuing to push on the lobe 304' (which is therefore kept in the retracted position), the operator can then conveniently pass the whole winding of optical fibres 6' through the widened passage 324' and thus place the optical fibres under the fin 320'. When the operator releases his pressure on the edge 310' of the lobe 304', the elastic return action of the connection to the surface 318' causes the lobe 304' to return to its original position (in other words, above the corresponding opening 314').

The operator can then repeat the operation for the other lobe 304'.

Finally, the operator can pass the optical fibre winding 6' under the second fins 322' as well. This operation can be facilitated by exerting a further gentle pressure on the edges 310' of the lobes 304', thus causing the lobes 304' to be retracted partially into the corresponding underlying openings 314'. In all cases, the distance between the lobes 304' and the second fins 322' is sufficient to enable the optical fibre winding to be passed through quite conveniently.

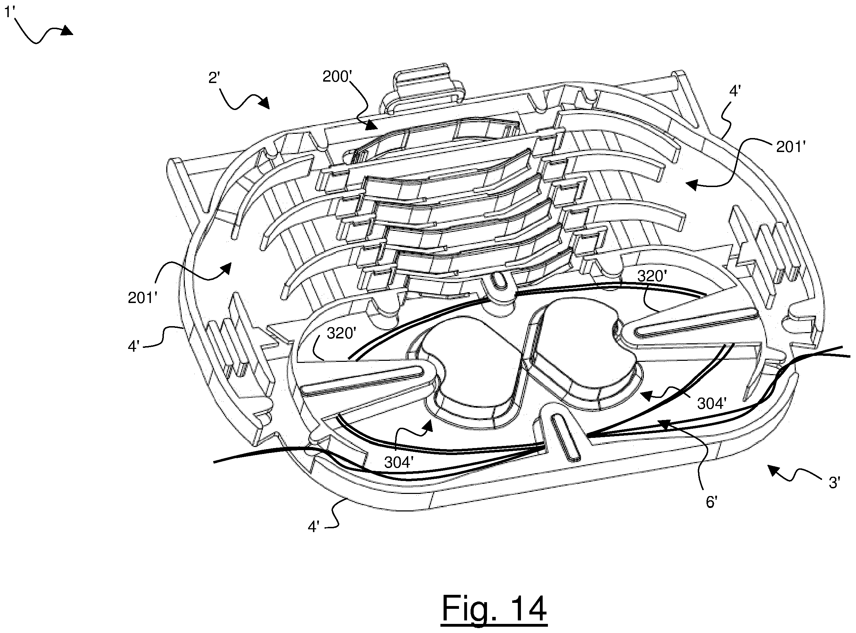

When the operator has completed the operations described above, the optical fibre winding 6' is therefore positioned on the fibre support surface 300' around the spool 302' under the fins 320' and 322', as shown in Figure 14. The operator can thus carry out any subsequent steps of the installation of the device 1'.

The first fins 320' and the second fins 322' advantageously retain the optical fibres loosely, substantially on the fibre support surface 300', especially when the device 1' is kept in a vertical or inverted position. In the case of the first fins 320', this function is aided by the shape of the passages 324', which have a curvature opposite to the curvature of the fibres in the winding.

The device 1' thus facilitates the arrangement of the optical fibres around the spool 302', since it is simply necessary to exert a gentle pressure on the edge 310' of each lobe 304' in order to widen the passages 324' between the spool 302' and the fins 320', thus allowing the whole winding of optical fibres 6' to pass through in a single operation. This operation is extremely simple and also minimizes the risk of damage or breakage of the fibres caused by a hasty or unskilled operator.

The device 1' can be made in one piece, without separate parts which may be lost or damaged. It can also be made in a very small size which would be particularly suitable for FTTP or FTTH applications.

Although both the device 1 according to the first embodiment and the device 1' according to the second embodiment are joint support trays, in other embodiments which are not shown in the drawings the optical fibre housing device can be any portion of a distribution, transition or termination box for FTTP or FTTH networks, or can be an organizer or tray which may be suitable for association with a distribution, transition or termination box, or an organizer or tray which may be suitable for association with a control cabinet or a line or extraction joint.

Additionally, although in both the device 1 according to the first embodiment and the device 1' according to the second embodiment the lobes of the spool all have the same shape and size and consequently the lobe support surface is located on the axis substantially perpendicular to the spool support surface, this is not a limiting feature. In fact, in embodiments which are not shown in the drawings, the lobes can have different shapes and sizes, according to the specific requirements of the application, and the lobe support surface can be in an eccentric position relative to the axis of the spool.

## Claims

1. A device (1, 1') for housing lengths of optical fibres, comprising:
- a fibre support surface (300, 300');
- a spool (302, 302') projecting from said fibre support surface (300, 300') wherein said spool (302, 302') comprises an upper surface (306);
- a fin (320, 320') projecting towards said spool (302, 302'), wherein said fin (320, 320') is at substantially the same height as said upper surface (306); and
- a passageway (324, 324') between a free end of said fin (320, 320') and said spool (302, 302'),
**characterized in that** said spool (302, 302') cooperates with said fibre support surface (300, 300') and is made elastic thereto so that said passageway (324, 324') widens when said spool upper surface (302, 302') is pushed towards said fibre support surface (300, 300') for easing arrangement of a portion (6, 6') of said lengths of optical fibres.

2. The device (1, 1') according to claim 1, wherein said spool (302, 302') cooperates with said fibre support surface (300, 300') so that said passageway (324, 324') goes back to its width when the pressure on said spool (302, 302') is released.

3. The device (1, 1') according to claim 1 or 2, wherein said spool (302, 302') comprises at least one lobe (304, 304'), said lobe (304, 304') having an edge (310, 310') forming said passageway (324, 324') with said free end of said fin (320, 320'), said lobe (304, 304') being elastically connected to said fibre support surface (300, 300') so that said edge (310, 310') moves away from said free end of said fin (320, 320') thus widening said passageway (324, 324') when said lobe (304, 304') is pushed towards said fibre support surface (300, 300').

4. The device (1, 1') according to claim 3, wherein said lobe (304, 304') is elastically connected to said fibre support surface (300, 300') so that said edge (310, 310') moves again close to said free end of said fin (320, 320') so that said passageway (324, 324') goes back to its width when the pressure on said lobe (304, 304') is released.

5. The device (1, 1') according to claim 3 or 4, wherein said lobe (304, 304') comprises a vertex opposite to said edge (310, 310'), said lobe (304, 304') being elastically connected to said fibre support surface (300, 300') at said vertex.

6. The device (1, 1') according to any of claims 3 to 5, wherein said fibre support surface (300, 300') comprises at least one opening (314, 314') located below said lobe (304, 304') so that, when said lobe (304, 304') is pushed, said lobe (304, 304') engages at least partially said opening (314, 314').

7. The device (1, 1') according to any of claim 3 to 6, wherein said spool (302, 302') has a substantially cylindrical shape with an axis (X, X') substantially perpendicular to said fibre support surface (300, 300'), said spool (302, 302') comprising at least two lobes (304, 304') arranged with vertexes facing said axis (X, X') substantially perpendicular to said fibre support surface (300, 300').

8. The device (1, 1') according to claim 7, wherein said fibre support surface (300, 300') comprises a lobe support surface (318, 318') located substantially at said axis (X, X') substantially perpendicular to said fibre support surface (300, 300').

9. The device (1, 1') according to claim 8, wherein said fibre support surface (300, 300') comprises at least one arm (316, 316') connecting said lobe support surface (318, 318') to a portion of said fibre support surface (300, 300') surrounding said spool (302, 302'), so that said lobe support surface (318, 318') is elastically connected to said portion of said fibre support surface (300, 300') surrounding said spool (302, 302').

10. The device (1, 1') according to claim 9, wherein said at least two lobes (304, 304') are rigidly connected to said lobe support surface (318, 318') so that, when a lobe (304, 304') is pushed, all said at least two lobes (304, 304') move in a substantially integral manner.

11. The device (1, 1') according to claim 8, wherein said lobe support surface (318, 318') is rigidly connected to a portion of said fibre support surface (300, 300') surrounding said spool (302, 302').

12. The device (1, 1') according to claim 11, wherein each one of said at least two lobes (304, 304') is elastically connected to said lobe support surface (318, 318') so that, when a lobe (304, 304') is pushed, the remaining lobes (304, 304') remain substantially still.

## Patentansprüche

1. Vorrichtung (1, 1') zur Aufnahme optischer Fasern entsprechend ihrer Länge, mit:
- einer Faserhaltefläche (300, 300');
- einer Spule (302, 302'), die aus der Faserhalteoberfläche (300, 300') hervorsteht, wobei die Spule (302, 302') eine obere Fläche (306) aufweist;
- einer Rippe (320, 320'), die zu der Spule (302, 302') hin hervorsteht, wobei die Rippe (320, 320') im Wesentlichen auf der gleichen Höhe wie die obere Fläche (306) liegt; und
- einem Durchgang (324, 324') zwischen einem freien Ende der Rippe (320, 320') und der Spule (302, 302'),
**dadurch gekennzeichnet, dass**
die Spule (302, 302') mit der Faserhaltefläche (300, 300') zusammenwirkt und elastisch gestaltet ist derart, dass der Durchgang (324, 324') sich weitet, wenn die obere Fläche der Spule (302, 302') in Richtung zu der Faserhaltefläche (300, 300') gedrückt wird, um das Anordnen eines Teils (6, 6') der Länge von optischen Fasern zu erleichtern.

2. Vorrichtung (1, 1') nach Anspruch 1, wobei die Spule (302, 302') mit der Faserhaltefläche (300, 300') derart zusammenwirkt, dass der Durchgang (324, 324') wieder seine Breite einnimmt, wenn der Druck auf die Spule (302, 302') nicht mehr einwirkt.

3. Vorrichtung (1, 1') nach Anspruch 1 oder 2, wobei die Spule (302, 302') mindestens eine Ausbuchtung (304, 304') hat, wobei die Ausbuchtung (304, 304') eine Kante (310, 310') hat, die den Durchgang (324, 324') mit dem freien Ende der Rippe (320, 320') bildet, wobei die Ausbuchtung (304, 304') elastisch mit der Faserhaltefläche (300, 300') derart verbunden ist, dass die Kante (310, 310') sich von dem freien Ende der Rippe (320, 320') weg bewegt, wodurch der Durchgang (324, 324') geweitet wird, wenn die Ausbuchtung (304, 304') zu der Faserhaltefläche (300, 300') gedrückt wird.

4. Vorrichtung (1, 1') nach Anspruch 3, wobei die Ausbuchtung (304, 304') elastisch mit der Faserhaltefläche (300, 300') derart verbunden ist, dass die Kante (310, 310') sich wieder in die Nähe des freien Endes der Rippe (320, 320') bewegt, sodass der Durchgang (324, 324') wieder seine Breite einnimmt, wenn der Druck auf die Ausbuchtung (304, 304') nicht mehr einwirkt.

5. Vorrichtung (1, 1') nach Anspruch 3 oder 4, wobei die Ausbuchtung (304, 304') einen Eckpunkt gegenüberliegend zu der Kante (310, 310') hat, und wobei die Ausbuchtung (304, 304') elastisch mit der Faserhaltefläche (300, 300') an dem Eckpunkt verbunden ist.

6. Vorrichtung (1, 1') nach einem der Ansprüche 3 bis 5, wobei die Faserhaltefläche (300, 300') mindestens eine Öffnung (314, 314') aufweist, die unter der Ausbuchtung (304, 304') derart angeordnet ist, dass, wenn die Ausbuchtung (304, 304') gedrückt wird, die Ausbuchtung (304, 304') zumindest teilweise mit der Öffnung (314, 314') in Eingriff tritt.

7. Vorrichtung (1, 1') nach einem der Ansprüche 3 bis 6, wobei die Spule (302, 302') eine Zylinderform hat mit einer Achse (X, X'), die im Wesentlichen senkrecht zu der Faserhaltefläche (300, 300') verläuft, wobei die Spule (302, 302') mindestens zwei Ausbuchtungen (304, 304') aufweist, die mit Eckpunkten versehen sind, die der Achse (X, X') im Wesentlichen senkrecht zu der Faserhaltefläche (300, 300') zugewandt sind.

8. Vorrichtung (1, 1') nach Anspruch 7, wobei die Faserhaltefläche (300, 300') eine Ausbuchtungshaltefläche (318, 318') aufweist, die im Wesentlichen an der Achse (X, X') im Wesentlichen senkrecht zu der Faserhaltefläche (300, 300') angeordnet ist.

9. Vorrichtung (1, 1') nach Anspruch 8, wobei die Faserhaltefläche (300, 300') mindestens einen Arm (316, 316') aufweist, der die Ausbuchtungshaltefläche (318, 318') mit einem Bereich der Faserhaltefläche (300, 300'), der die Spule (302, 302') umgibt, derart verbindet, dass die Ausbuchtungshaltefläche (318, 318') elastisch mit dem Bereich der Faserhaltefläche (300, 300'), der die Spule (302, 302') umgibt, verbunden ist.

10. Vorrichtung (1, 1') nach Anspruch 9, wobei die mindestens zwei Ausbuchtungen (304, 304') starr mit der Ausbuchtungshaltefläche (318, 318') derart verbunden sind, dass, wenn eine Ausbuchtung (304, 304') gedrückt wird, die mindestens zwei Ausbuchtungen (304, 304') jeweils sich im Wesentlichen gemeinsam bewegen.

11. Vorrichtung (1, 1') nach Anspruch 8, wobei die Ausbuchtungshaltefläche (318, 318') starr mit einem Bereich der Faserhaltefläche (300, 300'), der die Spule (302, 302') umgibt, verbunden ist.

12. Vorrichtung (1, 1') nach Anspruch 11, wobei die mindestens zwei Ausbuchtungen (304, 304') jeweils elastisch mit der Ausbuchtungshaltefläche (318, 318') derart verbunden sind, dass, wenn eine Ausbuchtung (304, 304') gedrückt wird, die verbleibenden Ausbuchtungen (304, 304') im Wesentlichen unbewegt bleiben.

## Revendications

1. Dispositif (1, 1') pour loger des longueurs de fibres optiques, comprenant :
- une surface de support de fibres (300, 300') ;
- une bobine (302, 302') faisant saillie à partir de ladite surface de support de fibres (300, 300'), dans lequel ladite bobine (302, 302') comprend une surface supérieure (306) ;
- une ailette (320, 320') faisant saillie vers ladite bobine (302, 302'), dans lequel ladite ailette (320, 320') est sensiblement à la même hauteur que ladite surface supérieure (306) ; et
- un passage (324, 324') entre une extrémité libre de ladite ailette (320, 320') et ladite bobine (302, 302'),
**caractérisé en ce que** ladite bobine (302, 302') coopère avec ladite surface de support de fibres (300, 300') et est rendue élastique par rapport à celle-ci de sorte que ledit passage (324, 324') s'élargisse lorsque ladite surface supérieure de bobine (302, 302') est poussée vers ladite surface de support de fibres (300, 300') pour faciliter l'agencement d'une partie (6, 6') desdites longueurs de fibres optiques.

2. Dispositif (1, 1') selon la revendication 1, dans lequel ladite bobine (302, 302') coopère avec ladite surface de support de fibres (300, 300') de sorte que ledit passage (324, 324') retrouve sa largeur lorsque la pression sur ladite bobine (302, 302') est relâchée.

3. Dispositif (1, 1') selon la revendication 1 ou 2, dans lequel ladite bobine (302, 302') comprend au moins un bossage (304, 304'), ledit bossage (304, 304') ayant un bord (310, 310') formant ledit passage (324, 324') avec ladite extrémité libre de ladite ailette (320, 320'), ledit bossage (304, 304') étant connecté de manière élastique à ladite surface de support de fibres (300, 300') de sorte que ledit bord (310, 310') s'écarte de ladite extrémité libre de ladite ailette (320, 320'), élargissant ainsi ledit passage (324, 324') lorsque ledit bossage (304, 304') est poussé vers ladite surface de support de fibres (300, 300').

4. Dispositif (1, 1') selon la revendication 3, dans lequel ledit bossage (304, 304') est connecté de manière élastique à ladite surface de support de fibres (300, 300') de sorte que ledit bord (310, 310') se déplace à nouveau à proximité de ladite extrémité libre de ladite ailette (320, 320') de sorte que ledit passage (324, 324') retrouve sa largeur lorsque la pression sur ledit bossage (304, 304') est relâchée.

5. Dispositif (1, 1') selon la revendication 3 ou 4, dans lequel ledit bossage (304, 304') comprend un sommet opposé audit bord (310, 310'), ledit bossage (304, 304') étant connecté de manière élastique à ladite surface de support de fibres (300, 300') au niveau dudit sommet.

6. Dispositif (1, 1') selon l'une quelconque des revendications 3 à 5, dans lequel ladite surface de support de fibres (300, 300') comprend au moins une ouverture (314, 314') située en dessous dudit bossage (304, 304') de sorte que, lorsque ledit bossage (304, 304') est poussé, ledit bossage (304, 304') engage au moins partiellement ladite ouverture (314, 314').

7. Dispositif (1, 1') selon l'une quelconque des revendications 3 à 6, dans lequel ladite bobine (302, 302') a une forme sensiblement cylindrique ayant un axe (X, X') sensiblement perpendiculaire à ladite surface de support de fibres (300, 300'), ladite bobine (302, 302') comprenant au moins deux bossages (304, 304') agencés avec des sommets faisant face audit axe (X, X') sensiblement perpendiculaire à ladite surface de support de fibres (300, 300').

8. Dispositif (1, 1') selon la revendication 7, dans lequel ladite surface de support de fibres (300, 300') comprend une surface de support de bossage (318, 318') située sensiblement au niveau dudit axe (X, X') sensiblement perpendiculaire à ladite surface de support de fibres (300, 300').

9. Dispositif (1, 1') selon la revendication 8, dans lequel ladite surface de support de fibres (300, 300') comprend au moins un bras (316, 316') connectant ladite surface de support de bossage (318, 318') à une partie de ladite surface de support de fibres (300, 300') entourant ladite bobine (302, 302'), de sorte que ladite surface de support de bossage (318, 318') soit connectée de manière élastique à ladite partie de ladite surface de support de fibres (300, 300') entourant ladite bobine (302, 302').

10. Dispositif (1, 1') selon la revendication 9, dans lequel lesdits au moins deux bossages (304, 304') sont connectés de manière rigide à ladite surface de support de bossage (318, 318'), de sorte que, lorsqu'un bossage (304, 304') est poussé, tous lesdits au moins deux bossages (304, 304') se déplacent de manière sensiblement conjointe.

11. Dispositif (1, 1') selon la revendication 8, dans lequel ladite surface de support de bossage (318, 318') est connectée rigidement à une partie de ladite surface de support de fibres (300, 300') entourant ladite bobine (302, 302').

12. Dispositif (1, 1') selon la revendication 11, dans lequel chacun desdits au moins deux bossages (304, 304') est connecté de manière élastique à ladite surface de support de bossage (318, 318') de sorte que, lorsqu'un bossage (304, 304') est poussé, les bossages restants (304, 304') restent sensiblement immobiles.
